# EUROPÄISCHE PATENTSCHRIFT

(11) **EP 3 323 673 B1**
(45) Veröffentlichungstag und Bekanntmachung des Hinweises auf die Patenterteilung: **06.03.2019**
(21) Anmeldenummer: 17001868.3
(22) Anmeldetag: 15.11.2017
(51) Int. Cl.: B60N 2/815, B60N 2/818, B60N 2/865, B60N 2/894, B60N 2/897

(54) **LINEARFÜHRUNG SOWIE KOPFSTÜTZE MIT LINEARFÜHRUNG**
LINEAR GUIDE AND HEAD RESTRAINT WITH LINEAR GUIDE
GUIDAGE LINÉAIRE ET APPUIE-TÊTE DOTÉ DU GUIDAGE LINÉAIRE

(30) Priorität: 17.11.2016 DE 102016013722
(43) Veröffentlichungstag der Anmeldung: 23.05.2018
(73) Patentinhaber: GRAMMER AG, 92224 Amberg (DE)
(72) Erfinder: Kober, Steve, 08233 Treuen (DE); Schmitt, Sebastian, 90409 Nürnberg (DE)
(74) Vertreter: Roche, von Westernhagen & Ehresmann

(56) Entgegenhaltungen:
- DE-U1- 29 613 073
- US-B1- 7 562 936

## Beschreibung

Die Erfindung betrifft zunächst eine Linearführung. Eine solche Linearführung wird z.B. bei Kopfstützen eingesetzt.

Aus offenkundiger Vorbenutzung ist z.B. eine Kopfstütze bekannt, bei welcher ein Kopfteil fest mit Haltestangen verbunden ist. Die Haltestangen weisen freie Endbereiche auf, die in fest mit der Rückenlehne eines Fahrzeugsitzes verbundenen Führungen bewegbar gelagert sind. In den Endbereichen sind mehrere Rastaussparungen ausgebildet, die mit Rastelementen der Führung zusammenwirken.

Aus der DE 296 13 073 U1 ist eine Vorrichtung zur Verriegelung einer Kopfstütze bekannt, bei welcher Haltestangen verstellbar in Lagern geführt sind und mit einer Verriegelungsvorrichtung in unterschiedlichen Höhenpositionen arretierbar sind. Die Verriegelungsvorrichtung umfasst einen fest am Kopfteil gehaltenen Federdraht, der in einer entspannten Form des Drahtes mit Rastkerben der Haltestangen in Eingriff ist. Der Federdraht ist an zwei Widerlagern positioniert, so dass eine Betätigung des Federdrahtes in einem Zentralbereich, quer zu einer Längsachse des Federdrahtes, den Federdraht in eine gebogene Form verformt so dass sich Enden des Federdrahtes aus den Rastkerben herausbewegen, was zur Folge hat, dass das Kopfteil höhenverstellbar ist.

Es war Aufgabe der Erfindung eine Linearführung mit Verriegelungsvorrichtung zu schaffen, bei welcher die Möglichkeiten der Anordnung einer Betätigung für die Verriegelungsvorrichtung vielfältiger sind. Die Aufgabe wurde gelöst mit einer Linearführung mit den Merkmalen des Anspruchs 1.

Die Linearführung umfasst wenigstens zwei Haltestangen, wobei jede Haltestange bewegbar in einem Lager geführt ist und mit einer Verriegelungsvorrichtung relativ zu dem Lager festsetzbar ist. "Linearführung" kann im Sinne der Erfindung z.B. bedeuten, dass das Lager relativ zu einer geraden oder zu einer wenigstens abschnittsweise gekrümmten Tragstange bewegbar geführt ist. Die Verriegelungsvorrichtung umfasst wenigstens einen relativ zu dem Lager fest angeordneten, elastisch verformbaren Stab mit wenigstens einem frei bewegbaren Endbereich. D.h. die Verriegelungsvorrichtung umfasst z.B. einen Stab mit zwei freien Endbereichen. Gemäß einer Alternative umfasst die Verriegelungsvorrichtung z.B. zwei Stäbe, die jeweils mindestens einen freien Endbereich aufweisen. Jeder freie Endbereich wirkt mit einer Anordnung einer der zwei Haltestangen zusammen, die wenigstens eine Kerbe umfasst.

Die Verriegelungsvorrichtung ist zwischen einer Löseposition und einer Riegelposition verstellbar. In der Löseposition ist der Stab so verformt, dass die Endbereiche außer Eingriff mit der Anordnung sind, d.h. außer Eingriff mit den Kerben sind. In der Riegelposition sind die Endbereiche in Eingriff mit der Anordnung, d. h. in Eingriff mit einer der Kerben der Anordnung. Dabei ist der Stab z.B. entspannt oder er unterliegt einer Vorspannung.

Die Verriegelungsvorrichtung umfasst eine Betätigungsvorrichtung. In einer ersten Stellung der Betätigungsvorrichtung ist die Verriegelungsvorrichtung von der Betätigungsvorrichtung in die Löseposition bewegt. In einer zweiten Stellung der Betätigungsvorrichtung ist die Verriegelungsvorrichtung unbetätigt, so dass die Verriegelungsvorrichtung in die Riegelposition bewegbar ist. Das kann z.B. erfolgen, indem sich der Stab aufgrund seiner elastischen Rückstellkraft entspannt, wobei sich die Endbereiche des Stabes in die Kerben bewegen oder den Kerben benachbart in Kontakt mit der Außenfläche der Haltestange bewegen. Bei einer geringfügigen Bewegung des Kopfteils rasten dann die Endbereiche in die Kerbe ein.

Die Rückstellkraft der Feder kann die Betätigungsvorrichtung z.B. in die erste Position zurückbelasten, so dass sich bei nachlassendem Druck auf die Betätigungsvorrichtung die Verriegelungsvorrichtung automatisch in die Riegelposition und die Betätigungsvorrichtung automatisch in die erste Stellung zurückbewegt.

Die Betätigungsvorrichtung umfasst einen Schieber mit mindestens einem Betätigungsansatz, welcher sowohl in eine erste Richtung, z.B. quer zu einer Längsachse des Stabes, als auch in eine zweite Richtung, z.B. parallel zu der Längsachse, bewegbar ist. Eine Bewegungsumlenkung lenkt den Schieber bei einer Betätigung in die zweite Richtung derart in die erste Richtung um, dass der Betätigungsansatz die Verriegelungsvorrichtung in die Löseposition bewegt.

Auf diese Weise kann die Betätigung außen an dem Kopfteil flexibel angeordnet werden und mittels der Bewegungsumlenkung in die gewünschte Betätigungsrichtung der Verriegelungsvorrichtung umgelenkt werden.

Eine Ausführungsform ist dadurch gekennzeichnet, dass der Stab sich an zwei Widerlagern abstützt und dass der Betätigungsansatz mit einem Zentralbereich des Stabes zusammenwirkt. Der Betätigungsansatz ist z.B. in der Lage eine Kraft auf den Stab auszuüben, die den Widerlagern entgegengerichtet ist. Die Kraft wirkt dabei zwischen den beiden Widerlagern auf den Stab. Auf diese Weise biegt sich der Stab durch, so dass sich z.B. Endbereiche des Stabes aus dem Eingriff mit der Anordnung von Kerben der jeweiligen Haltestange bewegen.

Eine alternative Ausführungsform ist dadurch gekennzeichnet, dass der Schieber zwei Betätigungsansätze umfasst wobei jeder Betätigungsansatz mit einem Endbereich zusammenwirkt. Jeder Endbereich des Stabes wirkt mit einem Betätigungsansatz des Schiebers zusammen. Die Endbereiche sind dann z.B. von den Betätigungsansätzen in die Löseposition bewegbar.

Eine weitere Ausführungsform ist dadurch gekennzeichnet, dass die Bewegungsumlenkung wenigstens eine erste Umlenkfläche sowie wenigstens eine erste Gegenfläche umfasst, wobei die erste Umlenkfläche und die erste Gegenfläche derart schräg zu der zweiten Richtung ausgebildet sind, dass sie den Schieber bei einer Bewegung in die zweite Richtung in die erste Richtung umlenkt. Der Schieber wird dann bei einer Bewegung des Schiebers in die zweite Richtung von dem Paar aus Umlenkfläche und Gegenfläche in die erste Richtung umgelenkt.

Eine Ausgestaltung der Erfindung ist dadurch gekennzeichnet, dass die Umlenkfläche einer relativ zu dem Lager festen Stuktur und die Gegenfläche dem Schieber zugeordnet ist. Die Gegenfläche ist relativ zu der festen Struktur bewegbar. Die feste Struktur kann z.B. das Kopfteil einer Kopfstütze sein, zu welcher der Schieber relativbeweglich angeordnet ist.

Eine weitere Ausführungsform ist dadurch gekennzeichnet, dass zusätzlich zu der ersten Umlenkfläche und der ersten Gegenfläche eine zweite Umlenkfläche und eine zweite Gegenfläche angeordnet sind. Die zweite Umlenkfläche und die zweite Gegenfläche sind derart schräg zu der zweiten Richtung ausgebildet, dass sie den Schieber bei einer Bewegung in eine dritte Richtung in die erste Richtung umlenken. Die dritte Richtung ist z.B. der zweiten Richtung entgegengesetzt. Der Schieber kann dann in die zweite Richtung oder in eine der zweiten Richtung entgegengesetzte Richtung bewegt werden, um die Verriegelungsvorrichtung in die Löseposition zu bewegen. Auf diese Weise ist es z.B. möglich, die Verriegelungsvorrichtung bei einer Kopfstütze von unterschiedlichen Seiten zu betätigen.

Eine Ausgestaltung der Erfindung zeichnet sich dadurch aus, dass der Stab von einem Federdraht, von einem Kunststoff oder von einem Verbundwerkstoff gebildet ist.

Gemäß einem zweiten Aspekt betrifft die Erfindung eine Kopfstütze. Eine solche Kopfstütze ist aus offenkundiger Vorbenutzung bekannt. Sie umfasst ein Kopfteil, welches an einem Fahrzeugsitz gelagert ist.

Es war Aufgabe der Erfindung eine Kopfstütze zu schaffen, die eine flexible Anordnung einer Betätigung ermöglicht.

Die Aufgabe wurde gelöst durch eine Kopfstütze mit den Merkmalen des Anspruchs 7.

Die Kopfstütze umfasst ein Kopfteil, welches an einem Fahrzeugsitz lagerbar ist. Die Kopfstütze umfasst wenigstens eine Linearführung gemäß einem der Ansprüche 1 bis 6.

Gemäß einer Ausführungsform ist ein erster Endbereich jeder Haltestange in einem Lager gelagert ist, welches dem Kopfteil zugeordnet ist. Die Haltestange ist relativ zu dem Lager bewegbar gelagert, so dass das Kopfteil relativ zu der Haltestange bewegbar ist. Auf diese Weise ist das Kopfteil z.B. höhenverstellbar. Ein zweiter Endbereich der Haltestange ist z.B. fest in einer Aufnahme gelagert, die an dem Fahrzeugsitz, insbesondere an der Rückenlehne befestigbar ist.

Zusätzlich oder alternativ ist ein zweiter Endbereich jeder Haltestange in einem Lager gelagert, welches einer Aufnahme zugeordnet ist, die an dem Fahrzeugsitz befestigbar ist. Der zweite Endbereich der Haltestange ist dann relativ zu dem Lager bewegbar. Auf diese Weise ist das Kopfteil z.B. vertikal verstellbar.

Gemäß einer weiteren Ausgestaltung der Erfindung umfasst ein an einem Fahrzeugsitz gelagertes Kopfteil der Kopfstütze ein Basisteil sowie ein Kopfanlageteil. Das Kopfanlageteil ist mit den Haltestangen an dem Basisteil lagerbar, wobei das Lager fest an dem Basisteil angeordnet ist. Die Haltestangen sind z.B. an dem Kopfanlageteil fest angeordnet. Ein von dem Kopfanlageteil abgewandter Endbereich der Haltestange ist in dem Lager bewegbar geführt. Das Kopfanlageteil ist auf diese Weise relativ zu dem Basisteil bewegbar gelagert. Das Kopfteil ist z.B. zum Kopf eines Sitzinsassen hin oder von dem Kopf weg bewegbar.

Weitere Vorteile der Erfindung ergeben sich anhand eines in den Fig. dargestellten Ausführungsbeispiels. Die schematischen Fig. zeigen:
Fig. 1 eine Frontansicht einer Kopfstütze mit einem Kopfteil in einer ersten unteren Position,
Fig. 2 in Anlehnung an Fig. 1 die Kopfstütze , wobei das Kopfteil in einer zweiten oberen Position angeordnet ist,
Fig. 3 eine Schnittdarstellung der Kopfstütze gemäß Schnittlinie III-III in Fig. 1, wobei eine Verriegelungsvorrichtung in einer Riegelposition angeordnet ist,
Fig. 4 in Anlehnung an Fig. 3 die Kopfstütze, wobei die Verriegelungsvorrichtung in eine Löseposition angeordnet ist,
Fig. 5 in Anlehnung an Fig. 3 eine Schnittdarstellung eines zweiten Ausführungsbeispiels der Kopfstütze, wobei die Verriegelungsvorrichtung in der Riegelposition angeordnet ist,
Fig. 6 die Kopfstütze gemäß Fig. 5, wobei die Verriegelungsvorrichtung in der Löseposition angeordnet ist.

Die Kopfstütze insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

Die Kopfstütze 10 umfasst gemäß einem ersten Ausführungsbeispiel der Erfindung ein Kopfteil 11 mit einer Kopfanlagefläche 36, welches mit zwei Haltestangen 12a und 12b an einem Fahrzeugsitz, insbesondere an einer Rückenlehne des Fahrzeugsitzes gelagert werden kann. Endbereiche 13 der Haltestangen 12a und 12b sind dabei in nicht dargestellten Aufnahmen gelagert, die an dem Fahrzeugsitz befestigt sind. Die Endbereiche 13 sind fest in den Aufnahmen arretiert, so dass eine Relativbewegung zwischen der Aufnahme und dem Endbereich 13 nicht möglich ist.

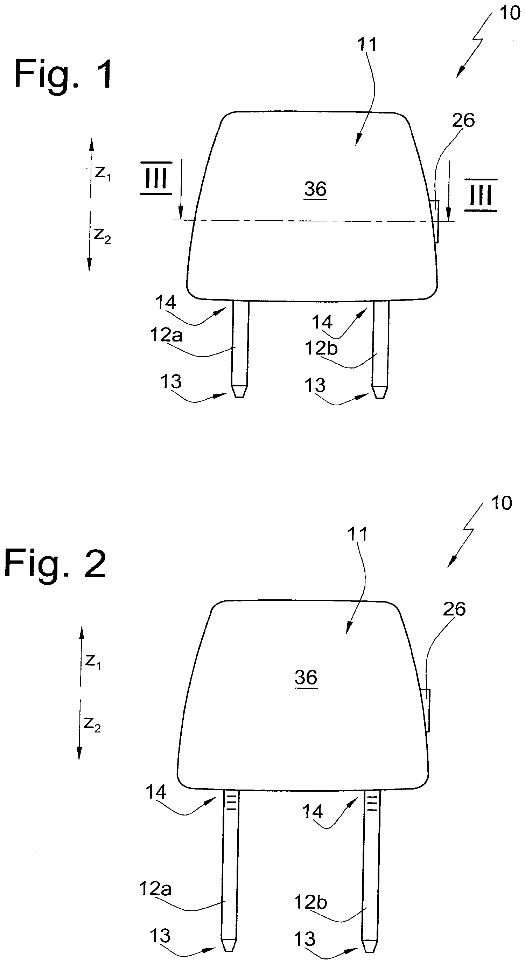

Ein oberer Endbereich 14 der Haltestangen 12a ist in einem Lager 15a (in den Fig. 1 und 2 nicht dargestellt) und ein Endbereich 14 der Haltestange 12b in einem Lager 15b derart bewegbar gelagert, dass das Kopfteil 11 relativ zu den Haltestangen 12a und 12b in die Richtungen z1 und z1 bewegbar ist. Die Lager 15a und 15b sind fest mit dem Kopfteil 11 verbunden. Das Kopfteil 11 bildet mit den Haltestangen 12a und 12b eine Linearführung 35. Eine untere Endposition ist in Fig. 1 dargestellt. Aus der unteren Endposition ist das Kopfteil 11 in Richtung z1 in die obere Endposition (siehe Fig. 2) oder in eine Position zwischen der unteren Endposition und der oberen Endposition bewegbar. Aus der oberen Endposition gemäß Fig. 2 ist das Kopfteil 11 in Richtung z2 in die untere Endposition oder in eine Position zwischen der oberen Endposition und der unteren Endposition bewegbar.

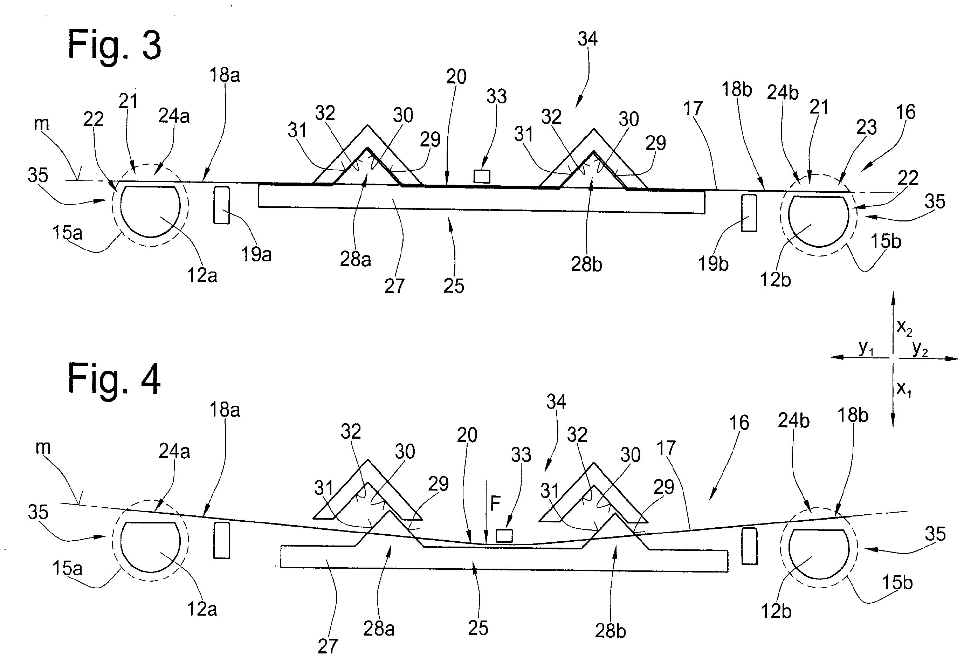

Die Kopfstütze 10 umfasst eine Verriegelungsvorrichtung 16, die in den Fig. 3 und 4 gezeigt ist. In Fig. 3 befindet sich die Verriegelungsvorrichtung 16 in einer Riegelposition und in Fig. 4 ist die Verriegelungsvorrichtung in einer Löseposition angeordnet, was nachfolgend genauer erläutert wird.

Die Verriegelungsvorrichtung 16 umfasst einen elastisch verformbaren Stab 17, der unbewegbar fest an dem Kopfteil 11 gehalten ist. Der Stab 17 ist derart an dem Kopfteil 11 befestigt, dass er zwischen einer im Wesentlichen geraden Form und einer gebogenen Form verformbar ist. Eine Längsachse des Stabes 17 ist mit m bezeichnet. Der Stab 17 ist derart bei voneinander beabstandeten Widerlagern 19a und 19b angeordnet, dass der Stab 17 sich in eine gebogene Form verformt, wenn eine Kraft F auf einen Zentralbereich 20 des Stabes 17 wirkt, welcher zwischen den Endbereichen 18a und 18b angeordnet ist.

Der Stab 17 ist darüber hinaus derart relativ zu den Lagern 15a und 15b angeordnet, dass sich die Endbereiche 18a und 18b durch eine Öffnung 21 in einen Innenraum 22 des Lagers 15a bzw. 15b bewegen können, in welchem die Haltestange 12a bzw. die Haltestange 12b geführt ist. In der Riegelposition greift der Endbereich 18a in eine Rastkerbe 23 einer Anordnung 24a von mehreren in Richtung z1 und z2 voneinander beabstandeten Rastkerben 23 an der Haltestange 12a ein.

Ebenso greift der Endbereich 18b in eine Rastkerbe 23 einer Anordnung 24b von mehreren in Richtung z1 und z2 voneinander beabstandeten Rastkerben 23 an der Haltestange 12b ein. Der Stab 27 unterliegt dabei z.B. einer Vorspannung, die den Endbereich 18a in Richtung x1 in Eingriff mit der Rastkerbe belastet. Der Stab 17 könnte gemäß einer alternativen Ausführung aber auch entspannt sein, wenn er sich im Eingriff mit einer der Rastkerben 23 der Anordnungen 24a und 24b befindet.

Wenn sich die Endbereiche 18a und 18b in Eingriff mit einer Rastkerbe 23 befinden, ist die Verriegelungsvorrichtung 16 in der Riegelposition gemäß Fig. 3 angeordnet. Das Kopfteil 11 kann dann z.B. weder in Richtung z1, noch in Richtung z2 bewegt werden. Das ist z.B. dann der Fall, wenn die Kerbe 23 derart geformt ist, dass eine Bewegung in Richtung z1 und z2 in der Riegelposition verhindert wird. Gemäß einer alternativen Ausführungsform kann die Kerbe 23 derart ausgebildet sein, dass bei einer Kraft auf das Kopfteil 11 in Richtung z1 die Endbereiche 18a und 18b sich automatisch aus der Riegelposition in eine Löseposition bewegen, so dass das Kopfteil 11 zwar in Richtung z1 bewegbar ist, nicht aber in Richtung z2.

Sind die Endbereiche 18a und 18b nicht innerhalb der Kerben 23 angeordnet, befindet sich die Verriegelungsvorrichtung 16 in der Löseposition (siehe Fig. 4).

Die Kopfstütze 10 umfasst eine Betätigungsvorrichtung 25, die einen Schalter 26 und einen Schieber 27 aufweist. Der Schalter 26 und der Schieber 27 sind in nicht dargestellter Weise derart bewegungsverbunden, dass sich der Schieber 27 in Richtung y1 bewegt, wenn der Schalter 26 in Richtung y1 bewegt wird. Der Schieber 27 ist derart an dem Kopfteil 11 geführt, dass er in Richtung y1 und y2 sowie in Richtung x1 und x2 bewegbar ist. In Fig. 3 ist die Betätigungsvorrichtung 25 in einer ersten Stellung angeordnet, in welcher die Verriegelungsvorrichtung 16 in der Riegelposition steht. In Fig. 4 ist die Betätigungsvorrichtung 25 in einer zweiten Stellung angeordnet in welcher sich die Verriegelungsvorrichtung in der Löseposition befindet.

Der Schieber 27 ist mit einer Bewegungsumlenkung 34 versehen, die voneinander beabstandete Vorsprünge 28a und 28b umfasst. Die Vorsprünge 28a und 28b weisen jeweils zueinander parallele Umlenkflächen 29 auf, die zu den Richtungen y1 und y2 geneigt sind. Die Umlenkflächen 29 wirken mit komplementären Gegenflächen 30 zusammen, die an dem Kopfteil 11 ausgebildet und in gleicher Weise geneigt sind. Die Neigung der Umlenkflächen 29 und der Gegenflächen 30 ist derart, dass bei einer Bewegung des Schiebers 27 aus der in Fig. 3 dargestellten Position in Richtung y1 der Schieber 27 sich auch in Richtung x1 bewegt.

An den Vorsprüngen 28a und 28b sind darüber hinaus parallele Umlenkflächen 31 ausgebildet, die zu den Richtungen y1 und y2 geneigt sind. Die Umlenkflächen 31 wirken mit komplementären Gegenflächen 32 zusammen, die in gleicher Weise geneigt sind. Die Neigung der Umlenkflächen 31 und der Gegenflächen 32 ist derart, dass bei einer Bewegung des Schiebers 27 aus der in Fig. 3 dargestellten Position in Richtung y2 der Schieber 27 sich auch in Richtung x1 bewegt. Auf diese Weise könnte die Betätigungsvorrichtung 25 auch betätigt werden, wenn sich der Schalter 26 an einer bezüglich der Fig. 1 und 2 gegenüberliegenden Seite des Kopfteils 11 befinden würde und den Schieber 27 in Richtung y2 betätigte.

Der Schieber 27 ist mit einem Betätigungsansatz 33 versehen. Bei einer Bewegung des Schiebers 27 in Richtung x1 übt der Betätigungsansatz 33 die Kraft F auf den Stab 17 aus, so dass sich die Verriegelungsvorrichtung 16 in die Löseposition bewegt, indem sich der Stab 17 in die gebogene Position verformt und die Endbereiche 18a und 18b außer Eingriff mit den Kerben 23 bewegt werden. In der Löseposition kann das Kopfteil 11 in die Richtungen z1 und z2 relativ zu den Haltestangen 12a und 12b bewegt werden.

Wird der Schalter 26 nicht mehr in Richtung y1 betätigt, so bewegt die Rückstellkraft den Stab 17 in die Form gemäß Fig. 3 zurück und bewegt dabei auch den Schieber 27 in die erste Stellung gemäß Fig. 3. Mit anderen Worten, die Betätigungsvorrichtung bewegt sich nach der Entlastung des Schalters 26 automatisch in die erste Stellung und die Verriegelungsvorrichtung bewegt sich in die Riegelposition.

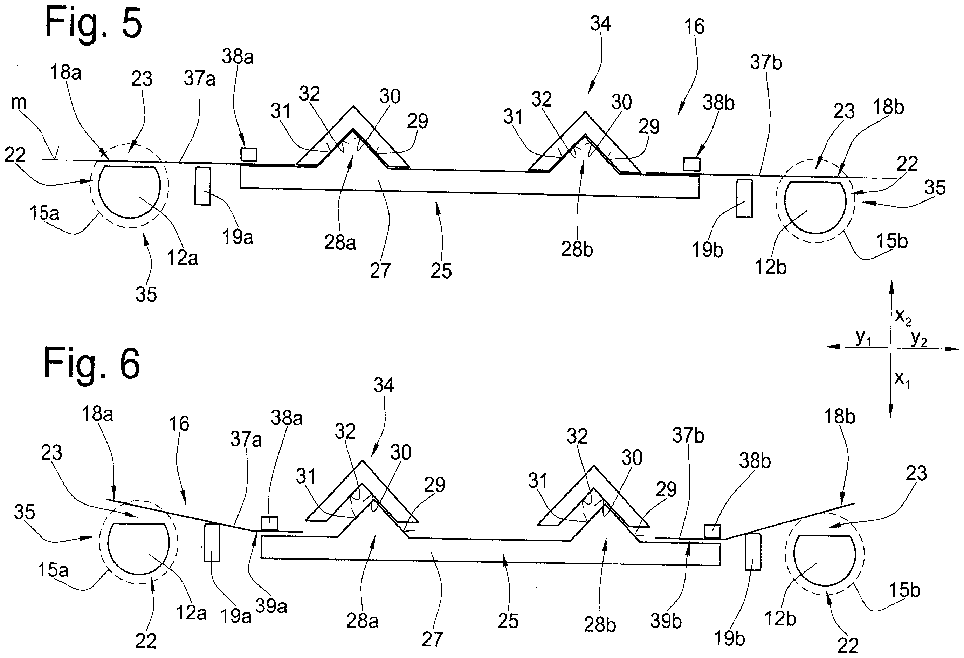

Ein zweites Ausführungsbeispiel ist in den Fig. 5 und 6 dargestellt. Es unterscheidet sich lediglich dadurch von dem ersten Ausführungsbeispiel, dass zwei Stäbe 37a und 37 b an dem Kopfteil 11 gehalten und zwei voneinander beabstandete Betätigungsansätze 38a und 38b mit dem Schieber 27 verbunden sind. Dem Stab 37a ist der Endbereich 18a und dem Stab 37b der Endbereich 18b zugeordnet. Bei einer Betätigung des Schiebers 27 aus der Position gemäß Fig. 5 in Richtung y1 oder in Richtung y2, wird der Schieber 27 in Richtung x1 bewegt. Von den Betätigungsansätzen 38a und 38b werden dann jeweils Kräfte F auf einen Zentralbereich 39a des Stabes 37a und auf einen Zentralbereich 39b des Stabes 37b ausgeübt, wodurch sich die Endbereiche 18a und 18b aus dem Eingriff mit der Kerbe 23 in die Löseposition (siehe Fig. 6) bewegen.

Die Rückstellkraft der Stäbe 37a und 37b bewegt die Verriegelungsvorrichtung 16 automatisch in die Riegelposition und die Betätigungsvorrichtung 25 automatisch in die erste Stellung gemäß Fig. 5, wenn die Betätigungsvorrichtung 25 nicht mehr betätigt wird.

## Patentansprüche

1. Linearführung mit wenigstens zwei Haltestangen (12a, 12b), mit einem Lager (15a, 15b) und mit einer Verriegelungsvorrichtung (16), wobei jede Haltestange bewegbar in dem Lager (15a, 15b) geführt ist und mit der Verriegelungsvorrichtung (16) relativ zu dem Lager (15a, 15b) festsetzbar ist, wobei die Verriegelungsvorrichtung (16) wenigstens einen relativ zu dem Lager (15a, 15b) fest angeordneten, elastisch verformbaren Stab (17) mit wenigstens einem frei bewegbaren Endbereich (18a, 18b) umfasst, wobei der Endbereich (18a, 18b) mit einer Kerbe (23) zusammenwirkt, die an einer der zwei Haltestangen (12a, 12b) ausgebildet ist und einer Anordnung (24), umfassend wenigstens eine Kerbe (23), so zugeordnet ist, dass die Verriegelungsvorrichtung (16) zwischen einer Löseposition, in welcher der Stab (17) so verformt ist, dass der Endbereich (18a, 18b) außer Eingriff mit der Anordnung (24) ist und einer Riegelposition, in welcher der Endbereich (18a, 18b) in Eingriff mit der Anordnung (24) ist, bewegbar ist, **dadurch gekennzeichnet, dass** die Betätigungsvorrichtung einen Schieber (27) mit mindestens einem Betätigungsansatz (33) umfasst, welcher sowohl in wenigstens eine erste Richtung (x1, x2), als auch in wenigstens eine zweite Richtung (y1, y2) bewegbar ist und dass eine Bewegungsumlenkung (34) vorgesehen ist, welche den Schieber (27) bei einer Betätigung in die zweite Richtung (y1, y2) derart in die erste Richtung umlenkt, dass der Betätigungsansatz (33) die Verriegelungsvorrichtung (16) in die Löseposition bewegt.

2. Linearführung nach Anspruch 1, **dadurch gekennzeichnet, dass** der Stab (17) sich an zwei Widerlagern (19a, 19b) abstützt und dass der Betätigungsansatz (33) mit einem Zentralbereich (20) des Stabes (17) zusammenwirkt.

3. Linearführung nach einem der vorangehenden Ansprüche, **dadurch gekennzeichnet, dass** der Schieber (27) zwei Betätigungsansätze umfasst wobei jeder Betätigungsansatz mit einem Endbereich (18a, 18b) zusammenwirkt.

4. Linearführung nach einem der vorangehenden Ansprüche, **dadurch gekennzeichnet, dass** die Bewegungsumlenkung (34) wenigstens eine erste Umlenkfläche (29) sowie wenigstens eine erste Gegenfläche (30) umfasst und dass die erste Umlenkfläche einer relativ zu dem Lager (15a, 15b) festen Stuktur und die Gegenfläche dem Schieber (27) zugeordnet ist, wobei die Umlenkfläche und die Gegenfläche derart schräg zu der zweiten Richtung (y1, y2) ausgebildet sind, dass sie den Schieber (27) bei einer Bewegung in die zweite Richtung (y1, y2) in die erste Richtung (x1) umlenkt.

5. Linearführung nach einem der vorangehenden Ansprüche, **dadurch gekennzeichnet, dass** spiegelbildlich zu der ersten Betätigungsfläche (29) und der ersten Gegenfläche (30) eine zweite Betätigungsfläche (31) und eine zweite Gegenfläche (32) angeordnet sind.

6. Linearführung nach einem der vorangehenden Ansprüche, **dadurch gekennzeichnet, dass** der Stab (17) von einem Federdraht, von einem Kunststoff oder von einem Verbundwerkstoff gebildet ist.

7. Kopfstütze mit einem Kopfteil (11), welches an einem Fahrzeugsitz lagerbar ist, wobei die Kopfstütze (10) wenigstens eine Linearführung (35) gemäß einem der Ansprüche 1 bis 6 umfasst.

8. Kopfstütze nach Anspruch 7, wobei ein erster Endbereich (14) jeder Haltestange (18a, 18b) in einem Lager (15a, 15b) gelagert ist, welches dem Kopfteil (11) zugeordnet ist.

9. Kopfstütze nach Anspruch 7 oder 8, wobei ein zweiter Endbereich (13) jeder Haltestange (18a, 18b) in einem Lager gelagert ist, welches einer Aufnahme zugeordnet ist, die an dem Fahrzeugsitz befestigbar ist.

10. Kopfstütze nach einem der Ansprüche 7 bis 9, wobei ein an einem Fahrzeugsitz gelagertes Kopfteil (11) der Kopfstütze ein Basisteil sowie ein Kopfanlageteil umfasst, wobei das Kopfanlageteil mit den Haltestangen an dem Basisteil lagerbar ist und wobei das Lager fest an dem Basisteil angeordnet ist.

## Claims

1. Linear guide comprising at least two support rods (12a, 12b), a mount (15a, 15b) and a locking device (16), wherein each support rod is movably guided in the mount (15a, 15b) and can be fixed relative to the mount (15a, 15b) by means of the locking device (16), wherein the locking device (16) comprises at least one elastically deformable bar (17) which is fixedly arranged relative to the mount (15a, 15b) and which has at least one freely movable end region (18a, 18b), wherein the end region (18a, 18b) cooperates with a notch (23) which is formed on one of the two support rods (12a, 12b) and is assigned to an arrangement (24), comprising at least one notch (23), such that the locking device (16) is movable between a release position, in which the bar (17) is deformed such that the end region (18a, 18b) is out of engagement with the arrangement (24), and a locking position, in which the end region (18a, 18b) is in engagement with the arrangement (24), **characterized in that** the actuation device comprises a slider (27) having at least one actuating projection (33) which is movable both in at least a first direction (x1, x2) and in at least a second direction (y1, y2), and **in that** a movement deflector (34) is provided which, when the slider (27) is actuated in the second direction (y1, y2), deflects said slider in the first direction such that the actuating projection (33) moves the locking device (16) into the release position.

2. Linear guide according to claim 1, **characterized in that** the bar (17) is supported on two abutments (19a, 19b), and **in that** the actuating projection (33) cooperates with a central region (20) of the bar (17).

3. Linear guide according to one of the preceding claims, **characterized in that** the slider (27) comprises two actuating projections, each actuating projection cooperating with an end region (18a, 18b).

4. Linear guide according to one of the preceding claims, **characterized in that** the movement deflector (34) comprises at least a first deflection surface (29) and at least a first counterpart surface (30), and **in that** the first deflection surface is assigned to a structure that is fixed relative to the mount (15a, 15b) and the counterpart surface is assigned to the slider (27), wherein the deflection surface and the counterpart surface are formed at an angle to the second direction (y1, y2) such that, when the slider (27) is moved in the second direction (y1, y2), they deflect said slider in the first direction (x1).

5. Linear guide according to one of the preceding claims, **characterized in that** a second actuating surface (31) and a second counterpart surface (32) are arranged as a mirror image of the first actuating surface (29) and the first counterpart surface (30).

6. Linear guide according to one of the preceding claims, **characterized in that** the bar (17) is formed from a spring wire, from a plastic or from a composite material.

7. Headrest having a head part (11) which can be mounted on a vehicle seat, wherein the headrest (10) comprises at least one linear guide (35) according to one of claims 1 to 6.

8. Headrest according to claim 7, wherein a first end region (14) of each support rod (18a, 18b) is mounted in a mount (15a, 15b) which is assigned to the head part (11).

9. Headrest according to claim 7 or 8, wherein a second end region (13) of each support rod (18a, 18b) is mounted in a mount which is assigned to a receptacle that can be fastened to the vehicle seat.

10. Headrest according to one of claims 7 to 9, wherein a head part (11) of the headrest, which is mounted on a vehicle seat, comprises a base part and a head support part, wherein the head support part can be mounted on the base part by means of the support rods, and wherein the mount is fixedly arranged on the base part.

## Revendications

1. Guidage linéaire avec au moins deux tiges de support (12a, 12b), avec un palier (15a, 15b) et avec un dispositif de verrouillage (16), chaque tige de support étant guidée de manière mobile dans le palier (15a, 15b) et pouvant être fixée avec le dispositif de verrouillage (16) par rapport au palier (15a, 15b), le dispositif de verrouillage (16) comprenant au moins une tige (17) élastiquement déformable, disposée de manière fixe par rapport au palier (15a, 15b) comportant au moins une partie d'extrémité (18a, 18b) librement mobile, la partie d'extrémité (18a, 18b) coopérant avec une encoche (23) qui est réalisée au niveau de l'une des deux tiges de support (12a, 12b) et une installation (24), comprenant au moins une encoche (23), en association de telle sorte que le dispositif de verrouillage (16) est mobile entre une position de libération, dans laquelle la tige (17) est déformée de sorte que la partie d'extrémité (18a, 18b) est hors prise avec l'installation (24) et une position de verrouillage, dans laquelle la partie d'extrémité (18a, 18b) est en prise avec l'installation (24), **caractérisé en ce que** le dispositif d'actionnement comprend une glissière (27) avec au moins une saillie d'actionnement (33) qui est mobile aussi bien dans au moins une première direction (x1, x2) et que dans au moins une seconde direction (y1, y2) et **en ce qu'**une déflexion de mouvement (34) est prévue, qui dévie la glissière (27) lors d'un actionnement dans la seconde direction (y1, y2) de telle sorte dans la première direction que la saillie d'actionnement (33) déplace le dispositif de verrouillage (16) dans la position de libération.

2. Guidage linéaire selon la revendication 1, **caractérisé en ce que** la tige (17) s'appuie au niveau de deux paliers de buée (19a, 19b) et **en ce que** la saillie d'actionnement (33) concoure avec une partie centrale (20) de la tige (17).

3. Guidage linéaire selon l'une des précédentes revendications, **caractérisé en ce que** la glissière (27) comprend deux saillies d'actionnement, chaque saillie d'actionnement concourant avec une partie d'extrémité (18a, 18b).

4. Guidage linéaire selon l'une des précédentes revendications, **caractérisé en ce que** la déflexion de mouvement (34) comprend au moins une première face de déflexion (29) ainsi qu'au moins une première face antagoniste (30) et **en ce que** la première face de déflexion est associée à une structure fixe par rapport au palier (15a, 15b) et la face antagoniste, à la glissière (27), la face de déflexion et la face antagoniste étant réalisées de sorte obliques à la seconde direction (y1, y2), qu'elle dévie la glissière (27), lors d'un mouvement dans la seconde direction (y1, y2), dans la première direction (x1).

5. Guidage linéaire selon l'une des précédentes revendications, **caractérisé en ce qu'**en image miroir à la première face d'actionnement (29) et à la première face antagoniste (30), sont disposées une deuxième face d'actionnement (31) et une deuxième face antagoniste (32).

6. Guidage linéaire selon l'une des précédentes revendications, caractérisé que la tige (17) est formée d'un fil de ressort, d'une matière plastique ou d'un matériau composite.

7. Appuie-tête avec une partie de tête (11) qui peut être placée au niveau d'un siège de véhicule, l'appuie-tête (10) comprenant au moins un guidage linéaire (35) selon l'une d'une revendication 1 à 6.

8. Appuie-tête selon la revendication 7, une première partie d'extrémité (14) de chaque tige de support (18a, 18b) étant placée dans un palier (15a, 15b), en association avec la partie de tête (11).

9. Appuie-tête selon la revendication 7 ou 8, une deuxième partie d'extrémité (13) de chaque tige de support (18a, 18b) étant placée dans un palier (15a, 15b), en association avec un logement qui peut être fixé au niveau du siège de véhicule.

10. Appuie-tête selon l'une des revendications 7 à 9, une partie de tête (11), placée au niveau d'un siège de véhicule, de l'appui-tête comprenant une partie de base ainsi qu'une partie de position de tête, la partie de position de tête pouvant être placée avec les tiges de support au niveau de la partie de base et le palier étant disposé fixement au niveau de la partie de base.
